# EUROPÄISCHE PATENTSCHRIFT

(11) **EP 3 870 495 B1**
(45) Veröffentlichungstag und Bekanntmachung des Hinweises auf die Patenterteilung: **04.12.2024**
(21) Anmeldenummer: 19794949.8
(22) Anmeldetag: 23.10.2019
(51) Int. Cl.: B62D 1/181, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 24.10.2018 DE 102018218243
(43) Veröffentlichungstag der Anmeldung: 01.09.2021
(73) Patentinhaber: thyssenkrupp Presta AG, 9492 Eschen (LI); thyssenkrupp AG, 45143 Essen (DE)
(72) Erfinder: GEISELBERGER, Thomas, 9014 St. Gallen (CH); HEIGENHAUSER, Benedikt, 3014 Bern (CH)
(74) Vertreter: thyssenkrupp Intellectual Property GmbH
(86) Internationale Anmeldenummer: PCT/EP2019/078809
(87) Internationale Veröffentlichungsnummer: WO 2020/083967

(56) Entgegenhaltungen:
- EP-A1- 0 705 754
- EP-A2- 2 586 677
- EP-A2- 2 607 204
- EP-B1- 2 822 836
- DE-A1- 102018 204 735
- US-A- 3 396 600
- US-A1- 2015 232 117
- US-A1- 2016 046 318
- US-A1- 2017 120 945

## Beschreibung

### Stand der Technik

Die Erfindung betrifft eine motorisch verstellbare Lenksäule für ein Kraftfahrzeug, umfassend eine an einer Fahrzeugkarosserie anbringbare Trageinheit, von der eine Stelleinheit gehalten ist, in der eine Lenkspindel um eine Längsachse drehbar gelagert ist, und umfassend einen Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel und eine Antriebseinheit aufweist, von der die die Gewindespindel relativ zur Spindelmutter rotatorisch antreibbar ist, wobei die Stelleinheit eine Manteleinheit aufweist, in dem ein Mantelrohr, in dem die Lenkspindel gelagert ist, in Richtung der Längsachse teleskopartig verstellbar aufgenommen ist, und der Verstellantrieb zur Längsverstellung wirksam zwischen Manteleinheit und Mantelrohr angeordnet ist, wobei die Getriebeeinheit an der Manteleinheit angebracht ist, und ein relativ dazu translatorisch bewegbarer Teil des Spindelantriebs mit dem Mantelrohr verbunden ist.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass ein Innenmantelrohr der Stelleinheit, im Folgenden auch kurz als Mantelrohr bezeichnet, in einer mit der Trageinheit verbundenen Manteleinheit, auch als Führungskasten, Außenmantelrohr oder Kastenschwinge bezeichnet, in Richtung der Längsachse teleskopartig verschiebbar aufgenommen ist, kann eine Längenverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längen- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um die Gewindespindelachse drehend antreibbar, wodurch diese je nach Drehrichtung translatorisch aufeinander zu oder voneinander wegbewegt werden können. In einer Ausführungsform, einem sogenannten Rotationsspindeltrieb, ist die Gewindespindel von der Antriebseinheit, die feststehend mit der Stelleinheit oder der Trageinheit verbunden ist, um ihre Gewindespindelachse drehend antreibbar und greift in die Spindelmutter ein, die an der Trageinheit oder der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder der Trageinheit, so dass ein rotatorischer Antrieb der Gewindespindel eine translatorische Verstellung von Trageinheit und Stelleinheit relativ zueinander bewirkt. In einer alternativen Ausführungsform, die als Tauchspindeltrieb bezeichnet wird, ist die Gewindespindel bezüglich Drehung um ihre Gewindespindelachse unverdrehbar mit der Trageinheit oder der Stelleinheit gekoppelt und die Spindelmutter ist drehbar, aber in Richtung der Gewindespindelachse feststehend entsprechend an der Stelleinheit oder der Trageinheit gelagert. Wie in der ersten Ausführungsform stützt sich die Gewindespindel in Richtung der Gewindespindelachse an der Trageinheit oder der Stelleinheit ab, und die Spindelmutter entsprechend an der Stelleinheit oder der Trageinheit, so dass die Gewindespindel durch die Antriebseinheit in Richtung der Gewindespindelachse translatorisch verschiebbar ist. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längsverstellung der Stelleinheit in Richtung der Längsachse der Lenkspindel kann ein Spindeltrieb eines Verstellantriebs zwischen dem Mantelrohr der Stelleinheit und einer dieses axial längsverschieblich aufnehmenden Manteleinheit angeordnet sein, welche mit der Trageinheit verbunden ist, und wobei die Gewindespindelachse im Wesentlichen parallel zur Längsachse ausgerichtet sein kann.

Zur Höhenverstellung kann ein Spindeltrieb zwischen der Trageinheit und einer daran höhenverschwenkbar gelagerten Stelleinheit angeordnet sein. An einer Lenksäule können eine motorische Längs- und Höhenverstellung einzeln oder in Kombination ausgebildet sein.

Im Stand der Technik wird in der DE 195 24 196 C1 eine Lenksäule beschrieben, bei der die Antriebseinheit eines Verstellantriebs einschließlich Antriebsmotor, Getriebe und Spindelmutter an der Manteleinheit angebracht ist, und die Gewindespindel an einem relativ dazu teleskopartig verstellbaren Mantelrohr der Stelleinheit angreift.

Eine ähnliche Anordnung ist aus der DE 10 2011 083 190 A1 bekannt, bei der die aus Antriebsmotor und Getriebe gebildete Antriebseinheit ebenfalls an der mit der Trageinheit verbundenen Manteleinheit angebracht ist.

Nachteilig an den bekannten Ausführungen ist der relativ große Bauraumbedarf für den Verstellantrieb im Bereich der Stelleinheit, wodurch die konstruktiven Möglichkeiten zur Anpassung an den im Fahrzeug verfügbaren Bauraum eingeschränkt werden.

Aus der EP 2 822 836 B1 ist eine Lenksäule der eingangs genannten Art bekannt. Daran die Übertragung des Antriebsmoments des Verstellantriebs nachteilig.

Aus der EP 0705754 A1 ist eine motorisch verstellbare Lenksäule bekannt, die die Merkmale im Oberbegriff des Anspruchs 1 offenbart.

Angesichts der vorangehend erläuterten Problematik ist es eine Aufgabe der vorliegenden Erfindung, eine verbesserte Übertragung des Antriebsmoments zu ermöglichen.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen. Erfindungsgemäß ist bei einer motorisch verstellbaren Lenksäule für ein Kraftfahrzeug, umfassend eine an einer Fahrzeugkarosserie anbringbare Trageinheit, von der eine Stelleinheit gehalten ist, in der eine Lenkspindel um eine Längsachse drehbar gelagert ist, und umfassend einen Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel und eine Antriebseinheit aufweist, von der die die Gewindespindel relativ zur Spindelmutter rotatorisch antreibbar ist, wobei die Stelleinheit eine Manteleinheit aufweist, in dem ein Mantelrohr, in dem die Lenkspindel gelagert ist, in Richtung der Längsachse teleskopartig verstellbar aufgenommen ist, und der Verstellantrieb zur Längsverstellung wirksam zwischen Manteleinheit und Mantelrohr angeordnet ist, wobei die Getriebeeinheit an der Manteleinheit angebracht ist, und ein relativ dazu translatorisch bewegbarer Teil des Spindelantriebs mit dem Mantelrohr verbunden ist vorgesehen, dass die Antriebseinheit über eine flexible Antriebsverbindung mit einer räumlich relativ zur Antriebseinheit verlagerbaren Getriebeeinheit verbunden ist.

Im Unterschieb zum Stand der Technik, bei dem das Getriebe starr und räumlich unveränderlich baulich an der Antriebseinheit festgelegt ist, sind bei der Erfindung die Antriebseinheit und die Getriebeeinheit räumlich und baulich voneinander separiert. Die Antriebseinheit bildet eine erste Baugruppe, welche den Antriebsmotor und gegebenenfalls ein Getriebe umfassen kann, und die Getriebeeinheit bildet eine davon separate zweite Baugruppe, welche ein mit der Spindelmutter oder der Gewindespindel verbundenes Getrieberad und weitere Getriebeglieder aufweisen kann. Zur Übertragung des Antriebsmoments ist erfindungsgemäß zwischen dem Ausgang der Antriebseinheit und dem Eingang der Getriebeeinheit eine räumlich bewegliche, flexible Antriebsverbindung eingesetzt. Die Antriebsverbindung umfasst ein Drehmomentübertragungsmittel, welches derart räumlich nachgiebig und bewegbar ausgestaltet ist, so dass eine Änderung der räumlichen Orientierung zwischen der Antriebseinheit und der Getriebeeinheit durch lineare Verschiebungen und/oder Verkippungen im Raum ausgeglichen werden kann.

Ein Vorteil der Erfindung ergibt sich daraus, dass die separate Getriebeeinheit wesentlich kleinere Abmessungen hat als die Antriebseinheit im Stand der Technik. Daher kann die Getriebeeinheit auch bei engen Platzverhältnissen und geringem lokal verfügbaren Bauraum beispielsweise an der Trageinheit oder der damit verbundenen Manteleinheit montiert werden. Durch eine entsprechende Ausgestaltung hinsichtlich Länge und Verlauf der Antriebsverbindung kann die Antriebseinheit zur Getriebeeinheit erfindungsgemäß räumlich distanziert positioniert werden. Vorzugsweise kann die Platzierung in einem räumlich weniger kritischen Bereich innerhalb des Bauraums erfolgen. Daraus resultiert eine größere konstruktive Gestaltungsfreiheit, und der zur Verfügung stehende Bauraum kann besser ausgenutzt werden.

Es ist möglich, dass die Getriebeeinheit synchron mit der Stelleinheit verlagerbar ist. Beim Verstellen wird die Stelleinheit relativ zur karosseriefesten Trageinheit räumlich verlagert. Die Getriebeeinheit kann räumlich relativ zur Stelleinheit fixiert sein, beispielsweise durch eine direkte oder mittelbare Verbindung mit der Stelleinheit, so dass sie beim Verstellen synchron mit der Stelleinheit bewegt wird.

Weitere Vorteile resultieren daraus, dass die Antriebsverbindung räumlich variabel ist, und das Drehmoment unabhängig von einer definierten, fluchtenden Ausrichtung von Antriebs- und Getriebeeinheit übertragen kann. Dadurch wird die Montage vereinfacht und die Betriebssicherheit erhöht. Darüber hinaus ist es möglich, die Antriebseinheit und die Getriebeeinheit an Funktionsteilen zu montieren, die im Betrieb der Lenksäule relativ zueinander bewegt werden, beispielsweise bei der Einstellung der Lenksäule, oder auch im Crashfall, bei dem die Lenksäule durch von außen einwirkende hohe Kräfte zusammengefahren wird. Weiterhin kann ein Verstellantrieb in vorteilhafter Weise modular gestaltet werden. Beispielsweise können unterschiedlich ausgestaltete Typen von Antriebseinheiten, beispielsweise mit unterschiedlichen Antriebsmomenten oder -geschwindigkeiten, mit speziell für jeweilige Anwendungszwecke angepassten Getriebeeinheiten kombiniert werden, die beispielsweise unterschiedliche Getriebeübersetzungen aufweisen, oder für Tauch- oder Rotationsspindelantriebe ausgebildet sind. Die Antriebsverbindung kann ebenfalls anwendungsspezifisch angepasst sein, beispielsweise hinsichtlich Länge, Durchmesser, Biegeradius oder Flexibilität, übertragbarem Drehmoment und zulässiger Drehzahl und dergleichen.

Bevorzugt weist die Getriebeeinheit ein Getriebeeinheitengehäuse auf, in dem das Getrieberad zumindest teilweise aufgenommen ist, wobei die Antriebseinheit ein Antriebseinheitengehäuse aufweist, in dem zumindest ein Bauteil des Antriebsmotor zumindest teilweise aufgenommen sind, wobei das Getriebeeinheitengehäuse und das Antriebseinheitengehäuse zueinander beabstandet sind, besonders derart zueinander beabstandet sind, dass das Getriebeeinheitengehäuse und das Antriebseinheitengehäuse zueinander berührungsfrei sind, d.h. nicht aneinander kontaktierend anliegen. Bevorzugt beträgt der Abstand zwischen dem Getriebeeinheitengehäuse und dem Antriebseinheitengehäuse wenigstens 1cm.

Der Antriebsmotor umfasst bevorzugt einen Stator als ein erstes Bauteil und einen dazu rotierbaren Rotor als zweites Bauteil.

Zur Realisierung der flexiblen Antriebsverbindung können Wellenanordnungen eingesetzt werden, die einen räumlichen und/oder winkligen Versatz ausgleichen können, beispielsweise Gelenkwellen, die versatzausgleichende Kupplungen, wie beispielsweise Oldhamkupplungen, Kreuz- oder Gleichlaufgelenke, und/oder Zahnwellen- oder sonstige Verbindungen zum Längenausgleich aufweisen können.

Eine vorteilhafte Ausführung ist, dass die flexible Antriebsverbindung eine biegsame Welle aufweist. Als drehmomentübertragendes Element dient dabei eine langgestreckte, frei im Raum biegbare Wellenseele, beispielsweise in Form einer Schraubenfeder aus Federstahldraht ähnlich einer Tachometerwelle. Die Wellenseele ist über geeignete Anschlussflansche ausgangsseitig mit der Antriebseinheit und eingangsseitig mit der Getriebeeinheit verbunden, beispielsweise mittels eines Mehrkantprofils, bevorzugt eines Vierkantprofils. Zum Schutz gegen äußere Einflüsse kann die Wellenseele in einem ebenfalls frei biegbaren Wellenschlauch angeordnet sein. Biegsame Wellen können in unterschiedlichen Längen mit geringem Aufwand gefertigt werden. Dadurch kann einfach eine Anpassung an spezifische Anwendungen und unterschiedliche Bauformen von Lenksäulen erfolgen.

Die Getriebeeinheit kann bevorzugt ein mit der Spindelmutter oder der Gewindespindel drehfest verbundenes, von der Antriebsverbindung drehend antreibbares Getrieberad umfassen. Bei einem Tauchspindelantrieb kann ein als Stirn-, Kegel- oder Schneckenrad ausgebildetes Getrieberad drehschlüssig mit der Spindelmutter verbunden sein, in welche die Gewindespindel eingreift und die axial, d.h.in Richtung der Gewindespindelachse an der Getriebeeinheit abgestützt ist. Bevorzugt taucht die Gewindespindel in Richtung der Gewindespindelachse vollständig durch die Spindelmutter hindurch, so dass sie beiderseits aus der Spindelmutter herausragt. Beim Verstellen wird die rotierend angetriebene Spindelmutter je nach Drehrichtung in die eine oder die entgegengesetzte Richtung auf der feststehenden Gewindespindel bewegt. Bei einem Rotationsspindelantrieb ist die Gewindespindel drehschlüssig mit dem Getrieberad verbunden, und axial in der Getriebeeinheit gestützt.

Alternativ ist es möglich, dass die Gewindespindel oder die Spindelmutter in der Getriebeeinheit unmittelbar drehschlüssig an die Antriebsverbindung angeschlossen ist.

In der Getriebeeinheit kann weiterhin mindestens ein Zwischenrad gelagert sein, welches mit dem Getrieberad kämmt und drehschlüssig mit der Antriebsverbindung verbunden ist, oder zumindest von der Antriebsverbindung drehend antreibbar ist. Das Zwischenrad kann beispielsweise als Stirn- oder Kegelrad, oder als Schnecke ausgebildet sein.

Gegebenenfalls können weitere Getriebeglieder in der Getriebeeinheit gelagert sein, beispielsweise Zwischenwellen oder -räder, Kupplungen oder dergleichen.

Eine vorteilhafte Weiterbildung ist, dass die Getriebeeinheit ein mehrstufiges Getriebe umfasst, also mindestens ein zweistufiges Getriebe. Dadurch, dass das Getriebe mindestens zwei Getriebestufen aufweist, kann einfach und zuverlässig ein hohes Übersetzungsverhältnis realisiert werden. Dieses kann ausgestaltet sein zur drehmoment- und kraftoptimierten Übertragung und Umsetzung des eingangsseitig von der Antriebseinheit in die Getriebeeinheit eingeleiteten Antriebsmoments in die relative lineare Verstellbewegung von Trag- und Stelleinheit.

Bevorzugt weisen mindestens zwei Getriebestufen unterschiedliche Getriebearten auf. Beispielsweise kann eine Getriebestufe ein Verzahnungsgetriebe umfassen, beispielsweise ein Stirnradgetriebe, und eine zweite Getriebestufe ein Schneckengetriebe oder einen Spindeltrieb mit einer in eine Spindelmutter eingreifenden Gewindespindel. Durch den Einsatz unterschiedlicher Getriebearten kann eine optimierte Anpassung an die geforderten Übertragungseigenschaften, Dimensionen, Gewicht und sonstige Betriebsanforderungen erfolgen.

Vorzugsweise können sämtliche Getriebestufen in einem gemeinsamen Getriebegehäuse aufgenommen sein. Durch die Unterbringung eines mehrstufigen, mindestens zweistufigen Getriebes in einem Getriebegehäuse wird eine kompakte, bauraumoptimierte und effiziente Bauweise ermöglicht.

Ein gemeinsames Getriebegehäuse stellt bevorzugt einen nach außen abgeschlossenen Gehäuseraum zur Verfügung, in dem sämtliche oder zumindest mehrere Getriebestufen angeordnet werden können. Dadurch kann eine geschützte, mit Schmierstoff gefüllte, abgedichtete Getriebeanordnung ausgebildet sein, die über die Betriebsdauer im Wesentlichen wartungsfrei oder zumindest wartungsarm ist.

Das Getriebegehäuse kann vorzugsweise mehrteilig ausgebildet sein, wobei beispielsweise nach dem Einsetzen der Getriebestufen zwei oder mehr Teilgehäuse mittels lösbarer oder unlösbarer Verbindungen zusammengefügt werden. Die Anzahl der Teilgehäuse oder Gehäuseteile kann im Hinblick auf die Fertigung optimiert werden, beispielsweise in Abhängigkeit von den eingesetzten Getriebearten und dergleichen.

Bevorzugt umfasst die Antriebseinheit einen Antriebsmotor, an dem ausgangsseitig die Antriebsverbindung angeschlossen ist. Es ist möglich, dass die Motorwelle, die mit dem Rotor gekoppelt ist, in der Antriebseinheit drehschlüssig mit der Antriebsverbindung gekuppelt ist, so dass beispielsweise die Wellenseele einer biegsamen Welle mit der Drehzahl des Antriebsmotors angetrieben wird. Eine vorteilhafte Ausgestaltung ist, dass die Antriebseinheit ein Untersetzungsgetriebe aufweist, an das eingangsseitig der Antriebsmotor und an dem ausgangsseitig die Antriebsverbindung angekoppelt ist.

Durch die Wahl des Untersetzungsverhältnisses eines Untersetzungsgetriebes der Antriebseinheit und des in der Getriebeeinheit realisierten Übersetzungsverhältnisses zwischen Antriebsverbindung und Spindelmutter oder Gewindespindel kann die das von der Antriebsverbindung zu übertragende Drehmoment und die Drehzahl vorgegeben und an die jeweilige Anwendung angepasst werden.

Die Antriebseinheit kann ein Antriebsgehäuse aufweisen. Der Antriebsmotor kann in das Antriebsgehäuse integriert sein, oder fest an diesem fixiert sein, beispielsweise mittels einer

Flanschverbindung. Weiterhin kann in dem Antriebsgehäuse ein Untersetzungsgetriebe zwischen Antriebsmotor und Antriebsverbindung realisiert sein, beispielsweise ein Schneckengetriebe mit einer mit der Motorwelle verbundenen Schnecke, die mit einem mit der Wellenseele der Antriebsverbindung drehfest verbundenen Schneckenrad kämmt.

Die Getriebeeinheit kann ein baulich von der Antriebseinheit getrennt ausgebildetes Getriebegehäuse aufweisen. Zwischen dem Antriebsgehäuse und dem Getriebegehäuse erstreckt sich die erfindungsgemäße flexible Antriebsverbindung, beispielsweise eine biegsame Welle. In dem Getriebegehäuse kann ein Getrieberad, welches mit der Spindelmutter oder der Gewindespindel verbunden ist, um die Spindelachse drehbar, aber axial fix gelagert sein. Ein mit dem Getrieberad kämmendes, mit der Antriebsverbindung, bevorzugt mit der Wellenseele verbundenes Zwischenrad kann ebenfalls in dem Getriebegehäuse gelagert sein. Weiterhin ist es möglich, dass die Getriebeeinheit Befestigungsmittel aufweist zur Verbindung mit der Trageinheit und/oder der Stelleinheit. Die Befestigungsmittel können an dem Getriebegehäuse angebracht oder ausgebildet sein, oder mit diesem zusammenwirken.

Es kann vorgesehen sein, dass die Stelleinheit eine Manteleinheit aufweist, in dem ein Mantelrohr, auch als Innenmantelrohr bezeichnet, in dem die Lenkspindel gelagert ist, in Richtung der Längsachse teleskopartig verstellbar aufgenommen ist. Die Manteleinheit ist mit der Trageinheit verbunden, und ist in Richtung der Längsachse gegen diese abgestützt. Das Mantelrohr ist zur Längsverstellung teleskopierend relativ zur Manteleinheit verstellbar.

Um einen erfindungsgemäßen Verstellantrieb zur Längsverstellung wirksam zwischen Manteleinheit und Mantelrohr zu realisieren, kann die Getriebeeinheit bevorzugt an der Manteleinheit angebracht sein, und der relativ dazu translatorisch bewegbare Teil des Spindelantriebs kann mit dem Mantelrohr verbunden sein. Dadurch ist das Mantelrohr als Teil der Stelleinheit relativ zur Trageinheit verstellbar, welche die Manteleinheit in Richtung der Längsachse gegen die Karosserie abstützt.

Eine vorteilhafte Ausführung der Erfindung sieht vor, dass zwischen der Getriebeeinheit und der Trageinheit eine Energieabsorptionseinrichtung angeordnet ist.

Eine Energieabsorptionseinrichtung dient zur Erhöhung der Insassensicherheit im Crashfall. Im Crashfall wird durch einen auf das Lenkrad auftreffenden Körper eine große Kraft auf die Stelleinheit ausgeübt, welche auf den Spindeltrieb der Verstelleinrichtung der Längsverstellung in Richtung der Gewindespindelachse wirkt. Über den Spindeltrieb wird diese sogenannte Crashkraft auf die Trageinheit übertragen. Durch eine Energieabsorptionseinrichtung, wie sie beispielsweise in der eingangs zitierten DE 195 24 196 C1 beschrieben ist, die zwischen Stelleinheit und Trageinheit angeordnet ist, kann ein kontrollierter Abbau der kinetischen Energie im Crashfall erfolgen. Dabei kann die kinetische Energie bei einer durch die Crashkraft verursachten Verschiebung der Antriebseinheit relativ zur Trageinheit, oder relativ zur damit verbundenen Manteleinheit, absorbiert und in Reibungs- und/oder Verformungsenergie umgewandelt werden. Vorzugsweise erfolgt eine entlang des Verschiebewegs der Lenksäule, der im Wesentlichen dem Verstellweg des Verstellantriebs entspricht, eine definiert vorgegebene, fortschreitende Energieabsorption, gemäß einer vorgegebenen Energieabsorptionscharakteristik.

Erfindungsgemäß wird im Crashfall nicht wie im Stand der Technik die Verstellantrieb als Ganzes relativ zur Trageinheit verlagert, oder wie in anderen bekannten Ausführungen, wie in der eingangs ebenfalls bereits genannten DE 10 2011 083 190 A1 nur die Gewindespindel oder die Spindelmutter, sondern es wird lediglich die separate Getriebeeinheit relativ zur Trageinheit bewegt. Die zwischen der Getriebeeinheit und der Trageinheit eingegliederte Energieabsorptionseinrichtung sorgt für eine Energieabsorption gemäß einer vorgegebenen Energieabsorptionscharakteristik entlang eines vorgegebenen Verschiebewegs der Getriebeeinheit zur Trageinheit, der auch als Crashweg bezeichnet wird.

Zur Energieabsorption in Richtung der Längsachse ist eine Energieabsorptionseinrichtung zwischen der Manteleinheit und der Getriebeeinheit ausgebildet. Eine vom Mantelrohr über die Gewindespindel auf die Getriebeeinheit ausgeübte Crashkraft bewirkt eine Bewegung der Getriebeeinheit auf einem Crashweg längs der Manteleinheit, wobei kinetische Energie absorbiert wird.

Vorteile gegenüber einer im Crashfall mitbewegten Antriebseinheit ist die geringere bewegte Masse, und kleinere auf dem Crashweg von der Getriebeeinheit durchlaufene Raumbereich.

Durch die flexible Antriebsverbindung wird die Bewegung der Getriebeeinheit relativ zur Antriebseinheit im Crashfall nicht merklich beeinträchtigt.

Die Energieabsorptionseinrichtung kann mindestens ein Energieabsorptionselement aufweisen, welches bei einer Bewegung der Getriebeeinheit in Richtung der Gewindespindel relativ zur Trageinheit plastisch deformierbar ist. Ein Energieabsorptionselement, gleichbedeutend auch als Crashelement bezeichnet, ist als Deformationselement im Kraftfluss der im Crashfall auftretenden Crashkraft in der Verbindung zwischen der Getriebeeinheit und der Trageinheit angeordnet, bei einem Verstellantrieb zur Längsverstellung bevorzugt zwischen der Getriebeeinheit und der Manteleinheit. Diese setzt die zwischen Manteleinheit und Getriebeeinheit eingeleitete kinetische Energie über einen vorgegebenen Deformationsweg in plastische Verformung eines Energieabsorptionselements um. Dadurch erfolgt eine über den Deformationsweg vergleichmäßigte Abbremsung bzw. eine konstruktiv vorbestimmte Abbremsung.

In der Energieabsorptionsvorrichtung kann zur Energieabsorption ein Langloch, ein sogenannter Crash-Schlitz, durch einen im Crashfall darin entlangbewegtes Verformungsorgan, beispielsweise einen Dorn, der Übermaß zum Crash-Schlitz hat, über seine Länge plastisch aufgeweitet werden. In alternativen Bauformen kann ein Deformationselement beispielsweise eine Biegelasche aufweisen, die über einen Verschiebeweg der Stelleinheit relativ zur Trageinheit kontinuierlich plastisch umgebogen wird, oder als Reißlasche, die durch die Relativbewegung im Crashfall aufgetrennt wird, oder eine kombinierte Biege-Reißlasche. Die Energieabsorption kann auch auf weitere Art und Weise erfolgen, beispielsweise durch eine Zerspanung eines Crashelements durch einen bewegten Meißel oder dergleichen.

In einer vorteilhaften Ausführung ist vorgesehen, dass die Getriebeeinheit ein Verformungsorgan aufweist, von dem ein Energieabsorptionselement bei einer Bewegung der Getriebeeinheit relativ zur Trageinheit plastisch deformierbar ist. Das Verformungsorgan kann einen vom Getriebeelement vorstehenden Dorn umfassen, beispielsweise außen am Getriebegehäuse, der in einen in Richtung der Spindelachse langgestreckten Crash-Schlitz eintaucht. Der Dorn ist im Querschnitt breiter als der Crash-Schlitz, welcher relativ zur Trageinheit feststeht, und beispielsweise in einem an der Manteleinheit fixierten Energieabsorptionselement ausgebildet ist. Alternativ kann die Getriebeeinheit eine Art Amboss aufweisen, durch den im Crashfall ein Energieabsorptionselement plastisch gestaucht oder gestreckt wird. Es ist ebenfalls denkbar, dass das Verformungsorgan eine Durchgangsöffnung aufweist, durch die ein Deformationsstreifen im Crashfall unter plastischer Verformung hindurchgezogen wird.

Es ist vorteilhaft, dass die Energieabsorptionseinrichtung eine Führungseinrichtung aufweist, in der die Getriebeeinheit im Crashfall entlanggleiten kann. Die Führungseinrichtung kann beispielsweise eine Schiene, beispielsweise ein langgestrecktes U-Profil umfassen, welches an der Manteleinheit parallel zur Längsachse befestigt sein kann, und in dem die Getriebeeinheit im Normalbetrieb gehalten ist und im Crashfall entlanggleiten kann.

Ein Energieabsorptionselement kann zwischen der Getriebeeinheit und der Führungseinrichtung ausgebildet sein. Beispielsweise kann die Getriebeeinheit an einem Getriebegehäuse einen vorstehenden Dorn aufweisen, der in einen in einem U-Profil ausgebildeten Crash-Schlitz eintaucht. Der Dorn hat eine mehrfache Funktion, nämlich die Getriebeeinheit im Normalbetrieb zu halten, und diese im Crashfall zu führen, und durch plastische Aufweitung die Energieabsorption zu bewirken.

Es kann weiterhin vorgesehen sein, dass die Energieabsorptionseinrichtung eine Schalteinrichtung aufweist, von der mindestens ein Energieabsorptionselement zwischen der Getriebeeinheit und der Trageinheit ein- oder auskoppelbar ist. Durch die Schalteinrichtung kann das Energieabsorptionsvermögen, das sogenannte Crashniveau, je nach Bedarf verringert oder erhöht werden. Hierzu kann mittels eines Schaltelements, das beispielsweise einen pyroelektrischen Aktor, einen sogenannten Pyroswitch umfasst, ein oder mehrere Energieabsorptionselemente zwischen Getriebeeinheit und Trageinheit ein- oder ausgekoppelt, und dadurch aktiviert oder deaktiviert werden. Beispielsweise können in einer Energieabsorptionsvorrichtung mehrere Dorne vorgesehen sein, die wahlweise mittels eines Pyroswitches in oder aus dem Eingriff mit einem oder mehreren Crash-Schlitzen gebracht werden können, oder es können Dorne mit unterschiedlichem Querschnitt für unterschiedliche Aufweitung eines Crash-Schlitzes aktiviert oder deaktiviert werden.

Zwischen der Getriebeeinheit und der Trageinheit kann ein Sollbruchelement angeordnet sein. Dieses kann beispielsweise als Scherstift ausgebildet sein und fixiert die Getriebeeinheit im Normalbetrieb relativ zur Trageinheit. Erst bei Überschreiten einer hohen Kraftschwelle, die nur im Crashfall auftritt, bricht das Sollbruchelement und gibt die relative Bewegung von Getriebeeinheit und Trageinheit frei, wobei die Energieabsorptionsvorrichtung aktiv wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer schematischen perspektivischen Ansicht von der gegenüberliegenden Seite,
- Figur 3: die Lenksäule gemäß Figur 1 in einer schematischen perspektivischen Ansicht von unten,
- Figur 4: eine Detailansicht der Getriebeeinheit der Lenksäule gemäß Figur 1 in geöffnetem Zustand,
- Figur 5: die Lenksäule gemäß Figur 1 in einer schematischen perspektivischen Ansicht in teilweise, auseinandergezogenem Zustand,
- Figur 6: die Lenksäule gemäß Figur 1 in einer Draufsicht im normalen Betriebszustand,
- Figur 7: die Lenksäule gemäß Figur 6 in Draufsicht im Zustand nach einem Crashfall (Crashzustand),
- Figur 8: eine vergrößerte Detailansicht wie in Figur 6 der Energieabsorptionseinrichtung in einer zweiten Ausführungsform im normalen Betriebszustand,
- Figur 9: eine vergrößerte Detailansicht wie in Figur 6 der Energieabsorptionseinrichtung in einer dritten Ausführungsform im normalen Betriebszustand,
- Figur 10: eine Ansicht der Energieabsorptionseinrichtung gemäß Figur 9 nach einem Crashfall (Crashzustand),
- Figur 11: eine vergrößerte Detailansicht wie in Figur 6 der Energieabsorptionseinrichtung in einer vierten Ausführungsform im normalen Betriebszustand,
- Figur 12: einen schematischen Längsschnitt durch eine Energieabsorptionseinrichtung in einer alternativen Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

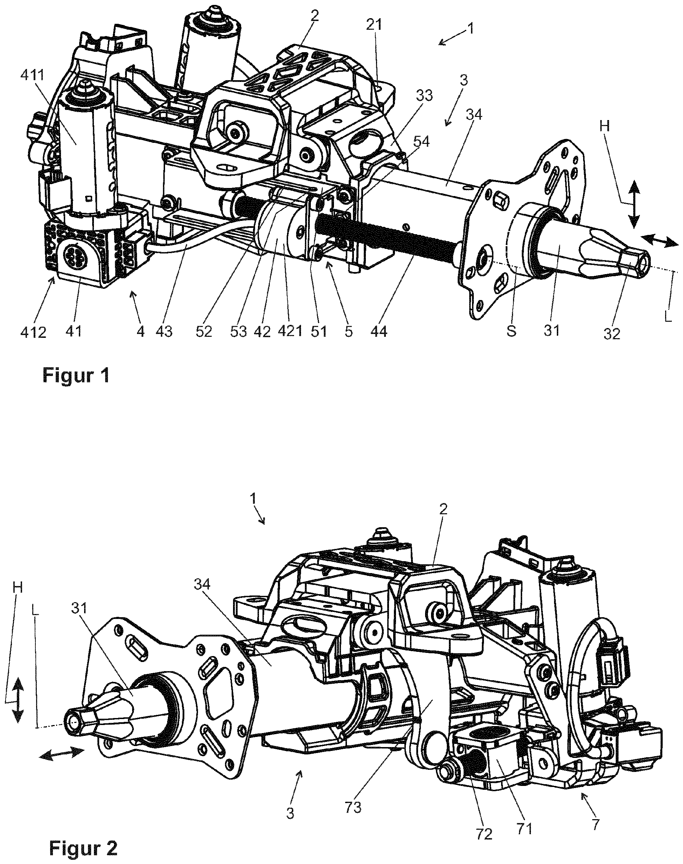

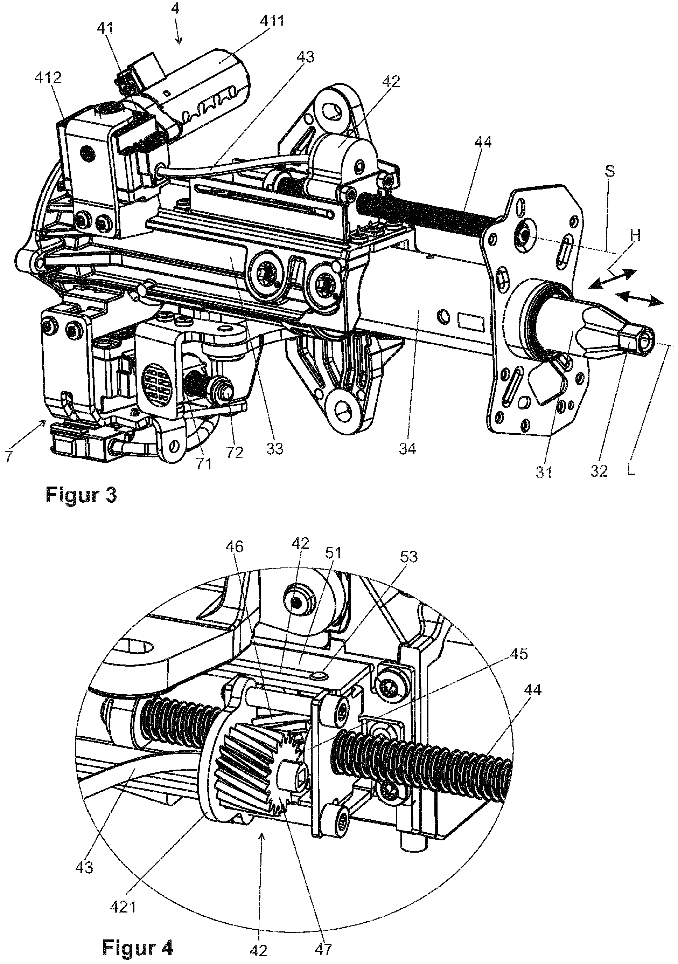

Figuren 1, 2 und 3 zeigen eine erfindungsgemäße Lenksäule 1 in schematischen perspektivischen Ansichten von oben schräg links (Figur 1) bzw. schräg rechts (Figur 2) bzw. von unten (Figur 3) auf das hintere Ende, in Fahrtrichtung eines nicht dargestellten Fahrzeugs gesehen.

Die Lenksäule 1 umfasst eine Trageinheit 2, die über Befestigungsbohrungen 21 an einer nicht dargestellten Fahrzeugkarosserie anbringbar ist. Von der Trageinheit 2 ist eine Stelleinheit 3 gehalten, in der eine Lenkspindel 31 um eine Längsachse L drehbar gelagert ist. In Richtung der Längsachse L ist die Stelleinheit 3 an der Trageinheit 2 abgestützt. An dem bezüglich der Fahrtrichtung hinteren Ende ist die Lenkspindel 31 mit einem Befestigungsabschnitt 32 zur Anbringung eines hier nicht dargestellten Lenkrads versehen.

Die Stelleinheit 3 weist eine Manteleinheit 33 auf, welche verschwenkbar relativ zur Trageinheit 2 gelagert ist, so dass der Befestigungsabschnitt 32 zur Höhenverstellung in einer Höhenrichtung H verstellbar ist.

In der Manteleinheit 33 ist ein Mantelrohr 34 - auch als inneres Mantelrohr oder Innenmantelrohr bezeichnet - in Längsrichtung, d.h. Richtung der Längsachse L axial teleskopierend verstellbar, um eine Längsverstellung zu realisieren, wie mit dem Doppelpfeil angedeutet.

Zur Längsverstellung ist ein erfindungsgemäßer Verstellantrieb 4 vorgesehen, der eine Antriebseinheit 41 und eine Getriebeeinheit 42 umfasst, die räumlich voneinander separiert und über eine flexible Antriebsverbindung in Form einer biegsamen Welle 43 miteinander verbunden sind.

Die Antriebseinheit 41 umfasst einen elektrischen Motor 411, der eingangsseitig an ein Untersetzungsgetriebe 412 angeflanscht ist. Ausgangsseitig ist die drehbare Wellenseele der biegsamen Welle 43 an das Untersetzungsgetriebe 412 angekuppelt. Die Antriebseinheit 41 ist an der Manteleinheit 33 befestigt, und auf diese Weise zumindest in Richtung der Längsachse L fest mir der Trageinheit 2 verbunden.

Die Getriebeeinheit 42 weist ein Getriebegehäuse 421 auf, welches in der Ansicht von Figur 4 teilweise weggelassen ist, um einen Blick in das Innere freizugeben.

Der Verstellantrieb 4 ist als sogenannter Tauchspindelantrieb ausgebildet, mit einer Gewindespindel 44, die sich mit ihrer Spindelachse S parallel zur Längsachse L erstreckt, und die gegen relative Drehung zur Längsachse L gesichert mit dem Mantelrohr 34 verbunden ist.

Die Gewindespindel 44 ist in eine Spindelmutter 45 eingeschraubt, die koaxial mit einem Getrieberad 46 verbunden ist, welches um die Spindelachse S drehbar in der Getriebeeinheit 42 gelagert ist. Das im Einzelnen nicht dargestellte Spindelgewinde kann auch in dem Getrieberad 46 ausgebildet sein, wodurch die Spindelmutter 45 damit integriert ausgebildet ist.

Ein Zwischenrad 47 weist eine mit dem Getrieberad 46 korrespondierende Verzahnung auf und ist in der Getriebeeinheit 42 gelagert, so dass es mit dem Getrieberad 46 kämmt. Das Zwischenrad 47 ist drehschlüssig mit der biegsamen Welle 43 gekoppelt.

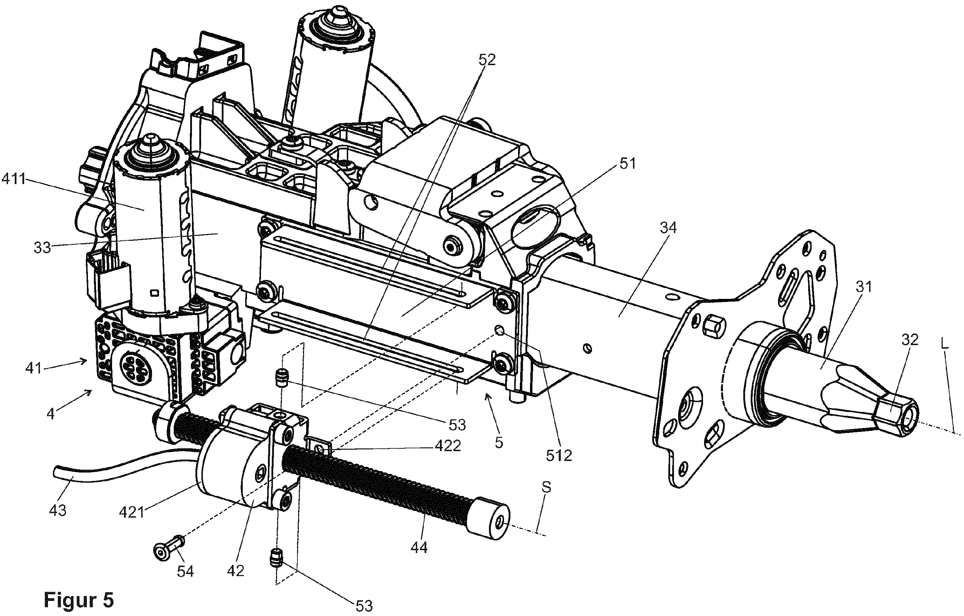

Zwischen der Getriebeeinheit 42 und der Manteleinheit 33 ist eine Energieabsorptionseinrichtung 5 angeordnet, deren Funktionselemente in der Darstellung von Figur 5 erkennbar sind, in welcher der Spindeltrieb einschließlich Getriebeeinheit 42 und Gewindespindel 44 schematisch quer zur Längsachse L auseinandergezogen dargestellt ist.

Die Energieabsorptionsvorrichtung 5 umfasst ein langgestrecktes, U-förmiges Führungsprofil 51, welches parallel zur Längsachse L seitlich an der Trageinheit 2 mittels Schrauben fixiert ist. Wie in den Figuren 1, 3 und 4 erkennbar, ist die Getriebeeinheit 42 zwischen den U-Schenkeln des Führungsprofils 51 gehalten.

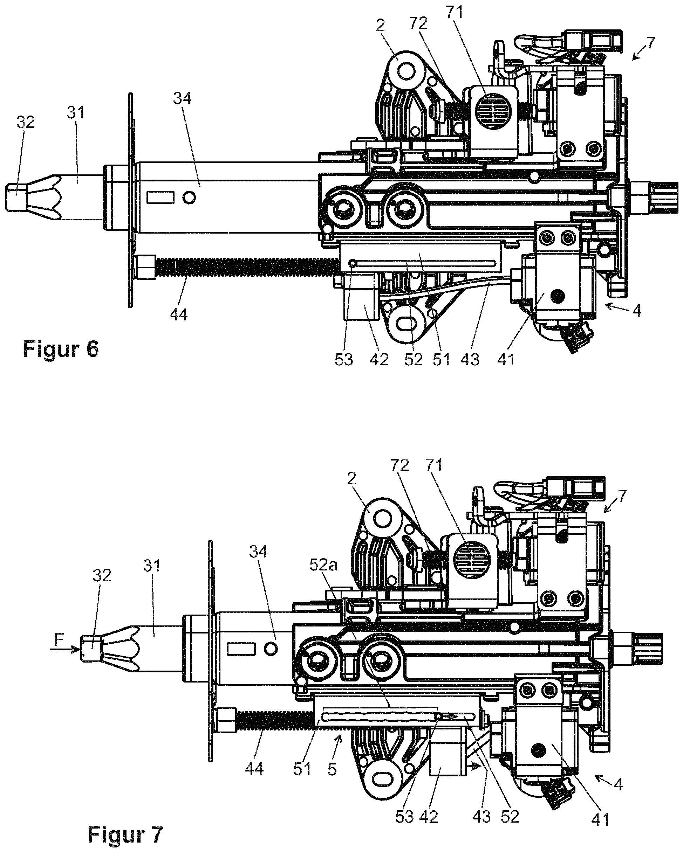

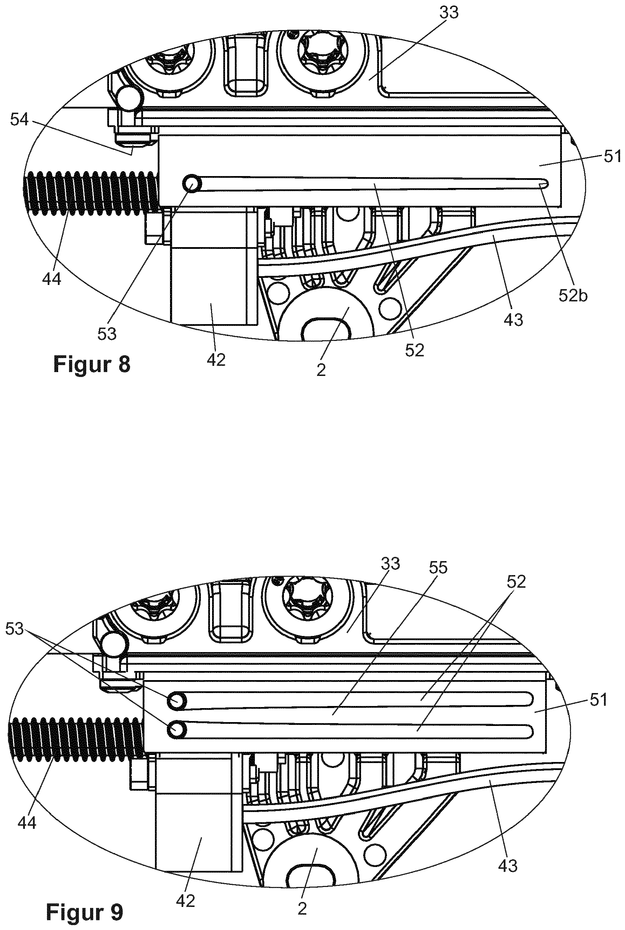

Zur eigentlichen Energieabsorption weist das Führungsprofil 51 in Richtung der Längsachse L langgestreckte Crash-Schlitze 52 auf. In jeden der Crash-Schlitze 52 taucht jeweils ein Verformungsorgan in Form eines Dorns 53 ein, wie in der Detailansicht von Figur 6 und 8 gut erkennbar ist.

Jeder Dorn 53 hat einen Querschnitt mit einer Breite, die größer ist als die Schlitzbreite des korrespondierenden Crash-Schlitzes 52.

Im normalen Betriebszustand, d.h. bevor ein Crashfall aufgetreten ist, befindet sich der Dorn 53 am hinteren Ende des Crash-Schlitzes 52, wie in Figur 6 dargestellt.

Zwischen der Getriebeeinheit 42 und der Manteleinheit 33 kann ein Sollbruchelement in Form eines Scherbolzens 54 angeordnet sein, der formschlüssig durch eine Befestigungsöffnung 422 im Getriebegehäuse 421 in einer korrespondierenden Öffnung 512 im Führungsprofil 51 festgelegt ist.

Wirkt im Crashfall eine große Crashkraft F in Richtung der Längsachse nach vorn auf die Lenkspindel 31, wie in Figur 6 gezeigt, wird diese über das Mantelrohr 34 und die daran abgestützte Gewindespindel 44, die Spindelmutter 45 und das Getrieberad 46 auf die Getriebeeinheit 42 übertragen. Überschreitet die Crashkraft F einen vorgegebenen Grenzwert, bricht der Scherbolzen 54. Dann wird durch die Crashkraft F die Getriebeeinheit 42 längs des Führungsprofils 51 bewegt, wie in Figur 7 mit dem Pfeil an der Getriebeeinheit 42 angedeutet. Dabei bewegen sich das Mantelrohr 34, die Lenkspindel 31, die Gewindespindel 44 und die Getriebeeinheit 42 relativ gegenüber dem Führungsprofil 51, der Manteleinheit 33 und der Antriebseinheit 41 unter Energieabsorption.

Durch die Relativbewegung im Crashfall wird der Dorn 53 im Crash-Schlitz 52 entlang bewegt, wodurch dieser fortschreitend unter Absorption kinetischer Energie plastisch aufgeweitet wird. Der dabei aufgeweitete Abschnitt 52a ist in Figur 7 erkennbar.

Wie aus Figuren 6 und 7 ersichtlich, verbleibt die Antriebseinheit 41 in ihrer Position relativ zur Manteleinheit 33 und zur Trageinheit 2. Die relative Bewegung im Crashfall bewirkt eine Verformung und damit ein Ausweichen der biegsamen Welle 43, wodurch die Relativbewegung der Getriebeeinheit 42 zur Energieabsorption praktisch nicht beeinträchtigt wird. Im Crashfall ist somit die Getriebeeinheit 42 relativ zur Antriebseinheit 41 verschiebbar.

Figur 8 zeigt eine zweite Ausführungsform, bei welcher der Crash-Schlitz 52 zu seinem vorderen Ende 52b hin - in der Zeichnung nach rechts - keilförmig zusammenläuft. Dadurch steigt im Crashfall die zur Aufweitung erforderliche Verformungsarbeit entlang des Crashwegs der Getriebeeinheit 42 relativ zur Manteleinheit 33 an, so dass eine progressive Energieabsorptionscharakteristik realisiert wird. Der Crashschlitz 52 weist dabei Seitenwände auf, wobei diese bevorzugt in einem Winkel kleiner gleich 10° keilförmig zusammenlaufen.

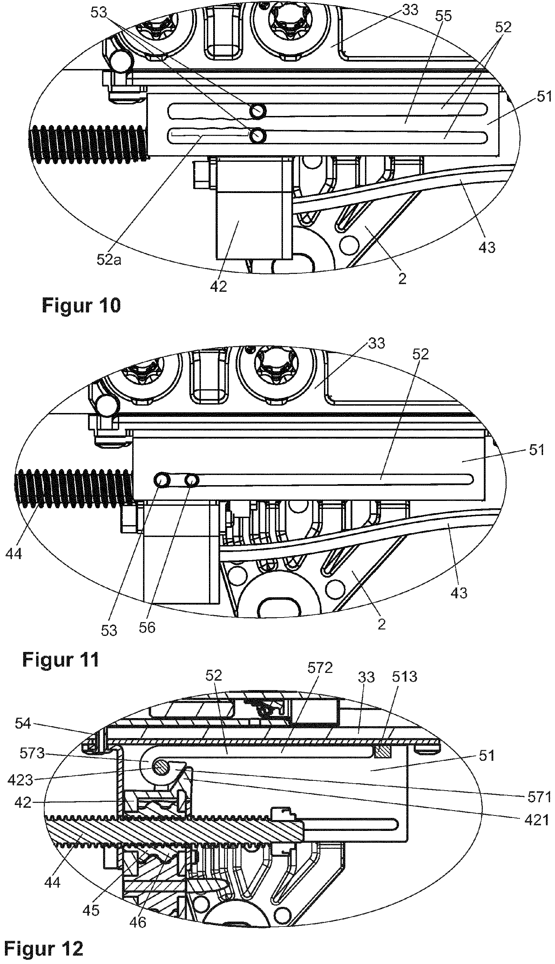

In den Figuren 9 und 10 ist eine dritte Ausführungsform gezeigt, welche in einem Schenkel des U-Profils 51 zwei benachbart verlaufende Crash-Schlitze 52 aufweist. Während die äußeren Außenkanten der beiden Schlitze 52 parallel verlaufen, begrenzen die inneren Kanten einen nach hinten keilförmig zusammenlaufenden Steg 55, der nach einem Crashfall im aufgeweiteten Abschnitt 52a plastisch verformt ist, wie in Figur 10 gezeigt. Es sind dabei zwei Dorne 53 vorgesehen, wobei diese zueinander beabstandet sind und zwischen denen der Steg 55 angeordnet ist. Im Crashfall verschieben sich die Dorne 53 relativ zu dem Steg 55 des Führungsprofils 51, wobei dieser Steg 55 durch die Dorne 53 hindurchbewegt wird und dabei plastisch deformiert wird. Dies ist besonders gut der Figur 10 entnehmbar, bei dem ein Abschnitt des Stegs 55 deformiert ist.

Die in Figur 11 gezeigte vierte Ausführungsform unterscheidet sich von der in Figur 8 gezeigten Ausführung dadurch, dass ein zusätzlicher, zweiter Dorn 56 vorhanden ist, der einen kleineren Querschnitt als der erste Dorn 53 hat. Dadurch, dass der erste Dorn 53 mittels eines nicht dargestellten pyrotechnischen Aktuators wahlweise aus dem Crash-Schlitz 52 entfernt werden kann, ist dann nur noch der zweite Dorn 56 aktiv. Durch seinen kleineren Querschnitt muss zum Durchgang durch den Crash-Schlitz 52 eine geringere Verformungsarbeit aufgewandt werden. Auf diese Weise kann durch Deaktivierung des ersten Dorns 53 ein niedrigeres Crashniveau eingestellt werden. Somit lassen sich auf eine einfache Art und Weise zwei unterschiedliche Crashniveaus darstellen.

Figur 12 zeigt schematisch einen Längsschnitt durch die Energieabsorptionseinrichtung 5. Daraus geht hervor, dass ein zusätzliches oder alternatives Energieabsorptionselement in Form eines Biegestreifens 57 zwischen der Getriebeeinheit 42 und der Manteleinheit 33 angeordnet sein kann. Mit einem eingangsseitigen Schenkel 571 ist der Biegestreifen 57 in Richtung der Spindelachse S hinter einen an der Getriebeeinheit 42 ausgebildeten Mitnehmer 423 eingehängt. Der andere, ausgangsseitige Schenkel 572 ist über eine im Wesentlichen U-förmigen Umbiegung 573 mit dem ersten Schenkel 571 verbunden, und stützt sich in Richtung der Längsachse L gegen ein Widerlager 513 an dem Führungsprofil 51 oder der Manteleinheit 33 ab.

Wenn die Getriebeeinheit 42 im Crashfall relativ zur Manteleinheit 33 in Richtung der Längsachse L nach vorn - in der Zeichnung nach rechts - verschoben wird, erfolgt eine fortlaufende plastische Verformung des Schenkels 572 in der dann durchlaufenden Umbiegung 573. Dadurch wird ebenfalls fortlaufend Crashenergie absorbiert. Die Dimensionen des Schenkels 572 können über die Längserstreckung des Schenkels 572 variieren.

Die Energieabsorptionseinrichtung 5 kann alternativ oder in Kombination unterschiedliche Anordnungen von Biegestreifen 57, in Crash-Schlitze 52 eingreifende Dorne 53, 56 und anderen Energieabsorptionseinrichtungen aufweisen, welche eine Absorption kinetischer Energie durch Umwandlung in Verformung und Reibung ermöglichen.

Zur Höhenverstellung kann ein zweiter Verstellantrieb 7 vorgesehen sein, der in Figur 2 erkennbar ist, und im gezeigten Beispiel als konventioneller Rotationsspindeltrieb ausgebildet ist. Dabei ist die translatorisch verschiebbare Spindelmutter 71, in die eine drehend antreibbare Gewindespindel 72 eingreift, an einen Verstellhebel 73 angelenkt, der in Höhenrichtung H verschwenkbar zwischen der Manteleinheit 33 und der Trageinheit 2 eingesetzt ist. Der Verstellantrieb 7 kann abweichend von der Zeichnung im Prinzip auch wie der erste, erfindungsgemäße Verstellantrieb 4 ausgestaltet sein.

### Bezugszeichenliste

- 1: Lenksäule
- 2: Trageinheit
- 21: Befestigungsbohrungen
- 3: Stelleinheit
- 31: Lenkspindel
- 32: Befestigungsabschnitt
- 33: Manteleinheit
- 34: Mantelrohr
- 4: Verstellantrieb
- 41: Antriebseinheit
- 411: Motor
- 412: Untersetzungsgetriebe
- 42: Getriebeeinheit
- 421: Getriebegehäuse
- 422: Befestigungsöffnung
- 423: Mitnehmer
- 43: biegsame Welle
- 44, 72: Gewindespindel
- 45, 71: Spindelmutter
- 46: Getrieberad
- 47: Zwischenrad
- 5: Energieabsorptionseinrichtung
- 51: Führungsprofil
- 512: Öffnung
- 513: Widerlager
- 52: Crash-Schlitz
- 52a: aufgeweiteter Abschnitt
- 52b: vorderes Ende
- 53, 56: Dorn
- 54: Scherbolzen
- 55: Steg
- 57: Biegestreifen
- 571: Schenkel
- 572: Schenkel
- 573: Umbiegung
- 7: Verstellantrieb
- 73: Verstellhebel

- L: Längsachse
- H: Höhenrichtung
- S: Spindelachse
- F: Crashkraft

## Patentansprüche

1. Motorisch verstellbare Lenksäule (1) für ein Kraftfahrzeug, umfassend eine an einer Fahrzeugkarosserie anbringbare Trageinheit (2), von der eine Stelleinheit (3) gehalten ist, in der eine Lenkspindel (31) um eine Längsachse (L) drehbar gelagert ist, und umfassend einen Verstellantrieb (4), der mit der Trageinheit (2) und mit der Stelleinheit (3) verbunden ist, und von dem die Stelleinheit (3) relativ zur Trageinheit (2) verstellbar ist,
wobei der Verstellantrieb (4) eine in eine Spindelmutter (45) eingreifende Gewindespindel (44) und eine Antriebseinheit (41) aufweist, von der die Gewindespindel (44) relativ zur Spindelmutter (45) rotatorisch antreibbar ist,
wobei die Stelleinheit (3) eine Manteleinheit (33) aufweist, in dem ein Mantelrohr (34), in dem die Lenkspindel (31) gelagert ist, in Richtung der Längsachse (L) teleskopartig verstellbar aufgenommen ist, und der Verstellantrieb (4) zur Längsverstellung wirksam zwischen Manteleinheit (33) und Mantelrohr (34) angeordnet ist, wobei eine Getriebeeinheit (42) an der Manteleinheit (33) angebracht ist, und ein relativ dazu translatorisch bewegbarer Teil (44) des Spindelantriebs mit dem Mantelrohr (34) verbunden ist,
**dadurch gekennzeichnet,**
**dass** die Antriebseinheit (41) über eine flexible Antriebsverbindung (43) mit der räumlich relativ zur Antriebseinheit (41) verlagerbaren Getriebeeinheit (42) verbunden ist.

2. Lenksäule nach Anspruch 1, **dadurch gekennzeichnet, dass** die flexible Antriebsverbindung eine biegsame Welle (43) aufweist.

3. Lenksäule nach einem der vorangehenden Ansprüche, **dadurch gekennzeichnet, dass** die Getriebeeinheit (42) ein mit der Spindelmutter (45) oder der Gewindespindel (44) drehfest verbundenes, von der Antriebsverbindung (43) drehend antreibbares Getrieberad (46) umfasst.

4. Lenksäule nach einem der vorangehenden Ansprüche, **dadurch gekennzeichnet, dass** die Antriebseinheit (41) einen Antriebsmotor (411) umfasst, an dem ausgangsseitig die Antriebsverbindung (43) angeschlossen ist.

5. Lenksäule nach einem der vorangehenden Ansprüche, **dadurch gekennzeichnet, dass** zwischen der Getriebeeinheit (42) und der Trageinheit (2) eine Energieabsorptionseinrichtung (5) angeordnet ist.

6. Lenksäule nach Anspruch 5, **dadurch gekennzeichnet, dass** die Energieabsorptionseinrichtung (5) mindestens ein Energieabsorptionselement (51, 52) aufweist, welches bei einer Bewegung der Getriebeeinheit (42) in Richtung der Achse der Gewindespindel (44) relativ zur Trageinheit (4) plastisch deformierbar ist.

7. Lenksäule nach Anspruch 6 **dadurch gekennzeichnet, dass** die Getriebeeinheit (42) ein Verformungsorgan (53, 56, 423) aufweist, von dem ein Energieabsorptionselement (51, 52) bei einer Bewegung der Getriebeeinheit (42) relativ zur Trageinheit (2) plastisch deformierbar ist.

8. Lenksäule nach einem der Ansprüche 5 bis 7, **dadurch gekennzeichnet, dass** die Energieabsorptionseinrichtung (5) eine Schalteinrichtung aufweist, von der mindestens ein Energieabsorptionselement (52) zwischen der Getriebeeinheit (42) und der Trageinheit (2) ein- oder auskoppelbar ist.

9. Lenksäule nach einem der vorangehenden Ansprüche, **dadurch gekennzeichnet, dass** zwischen der Getriebeeinheit (42) und der Trageinheit (2) ein Sollbruchelement (54) angeordnet ist.

## Claims

1. Motor-adjustable steering column (1) for a motor vehicle, comprising a support unit (2) which can be attached to a vehicle body and by which an adjusting unit (3) is held, in which a steering spindle (31) is mounted rotatably about a longitudinal axis (L), and comprising an adjusting drive (4) which is connected to the support unit (2) and to the adjusting unit (3), and by which the adjusting unit (3) can be adjusted relative to the support unit (2), the adjusting drive (4) having a threaded spindle (44) engaging in a spindle nut (45) and a drive unit (41), by which the threaded spindle (44) can be driven in rotation relative to the spindle nut (45),
the adjusting unit (3) having a casing unit (33) in which a casing tube (34), in which the steering spindle (31) is mounted, is accommodated so as to be adjustable telescopically in the direction of the longitudinal axis (L), and the adjusting drive (4) for longitudinal adjustment is effectively arranged between the casing unit (33) and the casing tube (34), a gear unit (42) being attached to the casing unit (33), and a part (44) of the spindle drive which can be moved in translation relative thereto being connected to the casing tube (34),
**characterized in**
**in that** the drive unit (41) is connected via a flexible drive connection (43) to the gear unit (42) which can be displaced spatially relative to the drive unit (41).

2. Steering column according to claim 1, **characterized in that** the flexible drive connection comprises a flexible shaft (43).

3. Steering column according to one of the preceding claims, **characterized in that** the gear unit (42) comprises a gear wheel (46) which is non-rotatably connected to the spindle nut (45) or the threaded spindle (44) and can be driven in rotation by the drive connection (43).

4. Steering column according to one of the preceding claims, **characterized in that** the drive unit (41) comprises a drive motor (411) to which the drive connection (43) is connected on the output side.

5. Steering column according to one of the preceding claims, **characterized in that** an energy absorption device (5) is arranged between the transmission unit (42) and the support unit (2).

6. Steering column according to claim 5, **characterized in that** the energy absorption device (5) has at least one energy absorption element (51, 52) which can be plastically deformed relative to the support unit (4) when the transmission unit (42) is moved in the direction of the axis of the threaded spindle (44).

7. Steering column according to claim 6, **characterized in that** the transmission unit (42) has a deformation member (53, 56, 423), of which an energy absorption element (51, 52) can be plastically deformed during a movement of the transmission unit (42) relative to the support unit (2).

8. Steering column according to one of claims 5 to 7, **characterized in that** the energy absorption device (5) has a switching device from which at least one energy absorption element (52) can be coupled or uncoupled between the transmission unit (42) and the support unit (2).

9. Steering column according to one of the preceding claims, **characterized in that** a predetermined breaking element (54) is arranged between the transmission unit (42) and the support unit (2).

## Revendications

1. Colonne de direction (1) réglable par moteur pour un véhicule automobile, comprenant une unité de support (2) pouvant être montée sur une carrosserie de véhicule, par laquelle est maintenue une unité de réglage (3) dans laquelle un arbre de direction (31) est logé de manière rotative autour d'un axe longitudinal (L), et comprenant un entraînement de réglage (4), qui est relié à l'unité de support (2) et à l'unité de réglage (3), et par lequel l'unité de réglage (3) peut être réglée par rapport à l'unité de support (2), l'entraînement de réglage (4) présentant une broche filetée (44) s'engageant dans un écrou de broche (45) et une unité d'entraînement (41), par laquelle la broche filetée (44) peut être entraînée en rotation par rapport à l'écrou de broche (45),
l'unité de réglage (3) présentant une unité d'enveloppe (33) dans laquelle un tube d'enveloppe (34), dans lequel est logé l'arbre de direction (31), est reçu de manière réglable de façon télescopique dans la direction de l'axe longitudinal (L), et l'entraînement de réglage (4) pour le réglage longitudinal est disposé de manière efficace entre l'unité d'enveloppe (33) et le tube d'enveloppe (34), une unité de transmission (42) étant montée sur l'unité d'enveloppe (33), et une partie (44) de l'entraînement de la broche, mobile en translation par rapport à celle-ci, étant reliée au tube d'enveloppe (34),
**caractérisé en ce que**
**en ce que** l'unité d'entraînement (41) est reliée par une liaison d'entraînement flexible (43) à l'unité de transmission (42) déplaçable dans l'espace par rapport à l'unité d'entraînement (41).

2. Colonne de direction selon la revendication 1, **caractérisée en ce que** la liaison d'entra nement flexible comprend un arbre flexible (43).

3. Colonne de direction selon l'une des revendications précédentes, **caractérisée en ce que** l'unité d'engrenage (42) comprend une roue d'engrenage (46) solidaire en rotation de l'écrou de broche (45) ou de la broche filetée (44) et pouvant être entraînée en rotation par la liaison d'entraînement (43).

4. Colonne de direction selon l'une des revendications précédentes, **caractérisée en ce que** l'unité d'entraînement (41) comprend un moteur d'entraînement (411) auquel est raccordée, côté sortie, la liaison d'entraînement (43).

5. Colonne de direction selon l'une des revendications précédentes, **caractérisée en ce qu'**un dispositif d'absorption d'énergie (5) est disposé entre l'unité de transmission (42) et l'unité de support (2).

6. Colonne de direction selon la revendication 5, **caractérisée en ce que** le dispositif d'absorption d'énergie (5) comprend au moins un élément d'absorption d'énergie (51, 52) qui est déformable plastiquement lors d'un mouvement de l'unité de transmission (42) dans la direction de l'axe de la tige filetée (44) par rapport à l'unité de support (4).

7. Colonne de direction selon la revendication 6, **caractérisée en ce que** l'unité de transmission (42) comporte un organe de déformation (53, 56, 423) dont un élément d'absorption d'énergie (51, 52) est déformable plastiquement lors d'un mouvement de l'unité de transmission (42) par rapport à l'unité de support (2).

8. Colonne de direction selon l'une des revendications 5 à 7, **caractérisée en ce que** le dispositif d'absorption d'énergie (5) comporte un dispositif de commutation dont au moins un élément d'absorption d'énergie (52) peut être couplé ou découplé entre l'unité de transmission (42) et l'unité de support (2).

9. Colonne de direction selon l'une des revendications précédentes, **caractérisée en ce qu'**un élément de rupture (54) est disposé entre l'unité de transmission (42) et l'unité de support (2).
